# EUROPEAN PATENT APPLICATION

(11) **EP 4 700 585 A1**
(43) Date of publication of application: **25.02.2026**
(21) Application number: 24758692.8
(22) Date of filing: 27.06.2024
(51) Int. Cl.: G06F 11/30, H04L 43/022, H04L 43/026, H04L 43/12, H04L 43/067

(54) **DATA MONITORING METHOD, SWITCH, ELECTRONIC DEVICE, AND MEDIUM**

(71) Applicant: New H3C Technologies Co., Ltd., Hangzhou, Zhejiang 310052 (CN)
(72) Inventor: XIANG, Xuefeng, Beijing 100102 (CN)
(74) Representative: 2SPL Patentanwälte PartG mbB
(86) International application number: PCT/CN2024/102115
(87) International publication number: WO 2026/000310

(57) **Abstract**

A data monitoring method, a switch, an electronic device, and media are provided in embodiments of the present application. In the embodiments, data monitoring is no longer performed separately by a Host CPU of the switch, but by corporation of the Host CPU and the Switch chip on the switch (the CPU built in the Switch chip, referred to as ECPU), and data monitoring in a time unit of millisecond level or even below the millisecond level, such as microsecond level, is performed by the Switch chip (the CPU built in the Switch chip, referred to as ECPU), and the monitoring data is transmitted to the Host CPU to be forwarded by the Host CPU to the traffic analyzer for analysis, which achieves data monitoring at a millisecond level by the cooperation between the local Host CPU of the switch and the ECPU on the Switch chip, and the actual situation of AI data burst under AI training scenario in intelligent computing center can be captured in time.

## Description

### TECHNICAL FIELD

The present application relates to network communication technology, and in particular, to a data monitoring method, a switch, an electronic device and media.

### BACKGROUND

In an Artificial Intelligence Data Center AI training scenario, training nodes in a distributed computing cluster need to communicate with each other. The data being communicated may be referred to as AI data. In actual application, AI data communicated among training nodes is typically forwarded via a switch.

Trends in AI data passing through local ports of the switch are typically represented by waveforms, where the duration of the peak may be at a millisecond level. According to the conventional data monitoring mode of a switch, for example, monitoring the bandwidth of a port at preset intervals of, for example, 5 seconds, the actual situation that AI data bursts cannot be captured in time because the monitoring period (generally, at a second level, for example, ten seconds, etc.) used by the conventional data monitoring mode is much greater than the above-mentioned peak duration of the millisecond level. In addition, a control plane of the switch, such as Host CPU, is shared by multiple tasks and therefore does not have sufficient resources to support the above-mentioned millisecond level of data monitoring, which further increases the difficulty of capturing actual bursts of the AI data.

### BRIEF DESCRIPTION OF DRAWINGS

The accompanying drawings, which are incorporated in and constitute a part of this specification, illustrate embodiments consistent with the disclosure and, together with the description, explain the principles of the disclosure.
FIG. 1 is a structural diagram showing a switch according to an embodiment of the present application;
FIG. 2 is a flow chart of a method according to an embodiment of the present application;
FIG. 3 is a structural diagram showing internal networking of a switch according to an embodiment of the present application;
FIG. 4 is a structural diagram showing internal networking of another switch according to an embodiment of the present application;
FIG. 5 is a structural diagram showing a switch according to an embodiment of the present application; and
FIG. 6 is a structural diagram showing an electronic device according to an embodiment of the present application.

### DETAILED DESCRIPTION

Reference will now be made in detail to exemplary embodiments, examples of which are illustrated in the accompanying drawings. When the following description refers to the accompanying drawings, like numbers in different drawings indicate the same or similar elements, unless otherwise indicated. The exemplary embodiments described in the following examples do not represent all embodiments consistent with the present application. Rather, they are merely examples of apparatus and methods that are consistent with some aspects of the present application.

In order that a person skilled in the art may better understand the technical solutions provided in the embodiment of the present application and make the above objects, features and advantages of the embodiments of the present application more apparent, a further detailed description of the technical solutions of the embodiment of the present application will be provided below in conjunction with the accompanying drawings.

The structure of the switch is first described below.

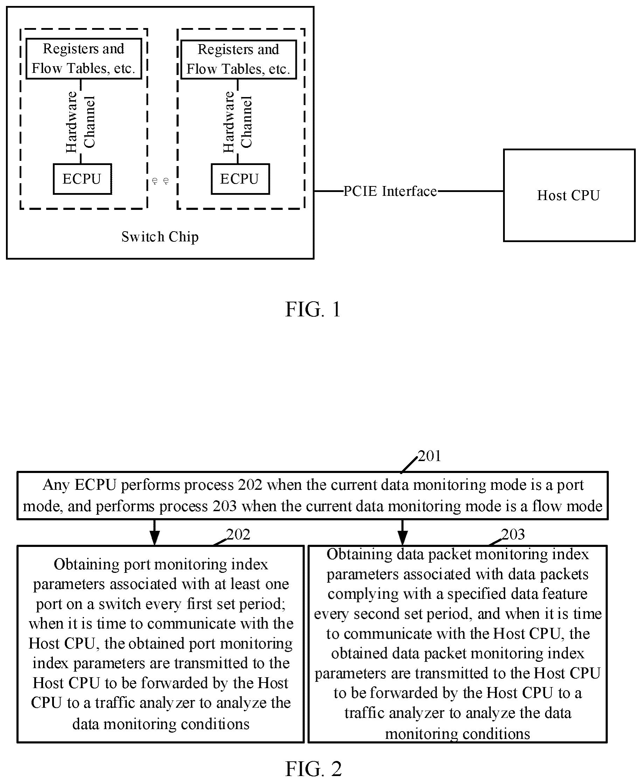

As shown in FIG. 1, the switch includes a Switch chip and a Host CPU. The Switch chip and the Host CPU are deployed independently.

In the present embodiment, the Host CPU bears a control plane of the switch and the Switch chip bears a forwarding plane of the switch. The Host CPU accesses the Switch chip via a PCIE interface, e.g. accessing resources such as registers and entries local to the Switch chip.

In the present embodiment, the Switch chip is deployed with at least one ECPU. Here, the ECPU is a built-in CPU on the Switch chip. Alternatively, the built-in CPU on the Switch chip may be an embedded CPU, such as an ARM CPU, etc., and the present embodiment is not particularly limited thereto.

In the present embodiment, each ECPU is configured with a separate hardware channel for accessing registers and flow tables, as shown in FIG. 1.

In conjunction with the switch structure as shown in FIG. 1, in the present embodiment, the data monitoring is no longer performed by the Host CPU alone, but by cooperation of the Host CPU and the ECPU, so as to realize data monitoring of millisecond level or even below the millisecond level, e.g. microsecond level, etc.. Thus, data changes which occur in time units such as millisecond level or below the millisecond level, e.g. microsecond level, etc., can be captured timely. When applied to the AI training scenario of the intelligent computing center, the actual situation that AI data bursts can be timely captured.

As an embodiment, when the Host CPU and the ECPU cooperate to perform data monitoring, the ECPU has a corresponding data monitoring mode. Here, the data monitoring mode may be a port mode or a flow mode.

As an embodiment, when the ECPU performs data monitoring in the port mode, the ECPU may communicate with the Host CPU to obtain port monitoring index items, such as port rates, occupancy of buffers configured for ports, the number of Explicit Congestion Notification (ECN) marked packets, and the number of Priority based Flow Control (PFC) sending and receiving data packets, etc. Then, the ECPU monitors at least one port on the switch according to a first set period in the port mode to obtain port monitoring index parameters. The ECPU then transmits the obtained port monitoring index parameters to the Host CPU to be forwarded by the Host CPU to a traffic analyzer to analyze the data monitoring conditions. The ECPU cooperates with the Host CPU via communication to realize that the Host CPU obtains the port monitoring index parameters monitored by the above-mentioned ECPU and forwards same to the traffic analyzer to analyze the data monitoring conditions.

In some examples, the first set period may be a default period or a period configured by the Host CPU. In particular implementations, the first set period may be 2 ms, 5 ms, 10 ms, etc. The present embodiment is not particularly limited thereto.

Alternatively, in the present embodiment, the at least one port monitored by the ECPU may include all ports on the switch, or may be ports assigned to be managed by this ECPU. The present embodiment is not particularly limited thereto. In some examples, if there are at least two ECPUs on the Switch chip, all ports of the switch may be divided to be assigned to and managed by the different ECPUs. The sum of the ports to which each ECPU is assigned is all ports of the switch.

As another embodiment, when the ECPU performs data monitoring in the flow mode, the ECPU obtains data packet monitoring index parameters associated with data packets complying with a specified data feature every second set period, and transmits the obtained data packet monitoring index parameters to the Host CPU to be forwarded by the Host CPU to a traffic analyzer to analyze the data monitoring conditions. The ECPU cooperates with the Host CPU via communication to realize that the Host CPU obtains the data packet monitoring index parameters monitored by the above-mentioned ECPU and forwards same to a traffic analyzer to analyze the data monitoring conditions.

In some examples, the above-mentioned data packet monitoring index parameters can be the number of data packets complying with a specified data feature, etc., and the present embodiment is not particularly limited to thereto.

In some examples, the above-mentioned data packet monitoring index parameters are obtained based on an ACL rule associated with the above-mentioned specified data feature allocated by the Host CPU and in consideration of monitoring index component which is bound with the ACL rule. Here, the bound monitoring index component is configured to record the data packet monitoring index parameter based on the ACL rule. For example, the above-mentioned data packet monitoring index parameter can be the number of data packets complying with specified data feature, and the monitoring index component is a Counter.

The ACL rule here indicates to control the monitoring index component to record a corresponding data packet monitoring index parameter when a data packet complying with the above specified data feature is received. For example, the above-mentioned data packet monitoring index parameter may be the number of data packets complying with a specified data feature, and the ACL rule is used for indicating to control the monitoring index component to increase the original data packet monitoring index parameter by a set value, such as 1, when a data packet complying with the above-mentioned specified data feature is received.

In conjunction with the above description, the methods provided in the embodiments of the present application are described below:

Referring to FIG. 2, FIG. 2 is a flow chart of a method provided in an embodiment of the present application. This procedure applies to the switch described above. As shown in FIG. 2, the procedure may include the following processes.

In process 201, any ECPU performs process 202 when the current data monitoring mode is a port mode, and performs process 203 when the current data monitoring mode is a flow mode.

In the present embodiment, whether the current data monitoring mode of any ECPU is the port mode or the flow mode is configured based on the current service requirements. For example, if one ECPU currently is needed to achieve high-precision monitoring of ports, the current data monitoring mode of the ECPU can be configured as the port mode. However, when the ECPU currently is needed to implement monitoring with a data flow as granularity, such as monitoring a burst condition of a data flow, the current data monitoring mode of the ECPU can be configured as the flow mode.

In process 202, port monitoring index parameters associated with at least one port on a switch are obtained every first set period; when it is time to communicate with the Host CPU, the obtained port monitoring index parameters are transmitted to the Host CPU to be forwarded by the Host CPU to a traffic analyzer to analyze the data monitoring conditions.

As described above, the first set period has a time unit of milliseconds, or a time unit below milliseconds such as microseconds, etc., and the present embodiment is not particularly limited thereto.

As described above, the port monitoring index parameters obtained by the ECPU in any period herein include real parameter values corresponding to at least one port monitoring index item in this period; here, the port monitoring index items are issued from the Host CPU to the ECPU.

As an embodiment, the port monitoring index parameters obtained in any period are used to reflect the real conditions of the network in this period. For example, the port monitoring index parameters include at least one of: port rates, occupancy of buffers configured for ports, the number of ECN marked packets, and the number of PFC sending and receiving packets.

The number of ECN marked packets refers to the sum of the number of data packets carrying an ECN flag transmitted by each port on the switch in this period, or the number of data packets carrying an ECN flag transmitted by the above-mentioned at least one port in this period, where the at least one port refers to at least one port managed by this ECPU. Here, transmitting of a data packet carrying an ECN flag is based on an ECN mechanism. The ECN mechanism is that when sensing that a port is congested, the switch notifies a transmitting end by transmitting a data packet carrying an ECN flag, so that the transmitting end reduces the transmitting rate to avoid data packet loss.

The number of PFC sending and receiving packets refers to the number of PFC packets transmitted in this period and the number of PFC packets received. Here, transmitting of the PFC packets is based on the PFC mechanism. The PFC mechanism is that when sensing that the data storage of a buffer configured for a port exceeds a set buffer threshold, the switch transmits one PAUSE frame to a transmitting end to temporarily prevent the transmitting end from transmitting more data packets. The buffer threshold is relatively low, so that the transmitting end has sufficient time to stop transmitting data packets and it can be ensured that the data packets transmitted by the transmitting end before receiving the PAUSE frame and received by the switch after transmitting the PAUSE frame are stored in the above-mentioned buffer without buffer overflow to prevent data packet loss.

In process 203, data packet monitoring index parameters associated with data packets complying with a specified data feature are obtained every second set period, and when it is time to communicate with the Host CPU, the obtained data packet monitoring index parameters are transmitted to the Host CPU to be forwarded by the Host CPU to a traffic analyzer to analyze the data monitoring conditions.

As described above, the second set period has a time unit of milliseconds, or a time unit below milliseconds such as microseconds, etc., and the present embodiment is not particularly limited thereto. As an embodiment, the first set period and the second set period are the same or different, and the present embodiment is not particularly limited thereto.

In the present embodiment, the above-mentioned specified data feature includes, for example, a data type (e.g. a feature of a lossless packet), a quintuple, etc., and the present embodiment is not particularly limited to this.

As described above, the above-mentioned data packet monitoring index parameters are obtained based on an ACL rule associated with the above-mentioned specified data feature allocated by the Host CPU and in consideration of a monitoring index component bound with the ACL rule. Here, the bound monitoring index component is configured to record the data packet monitoring index parameter based on the ACL rule. For example, the above-mentioned data packet monitoring index parameter can be the number of data packets complying with a specified data feature, and the monitoring index component is a Counter.

The ACL rule here indicates to control the monitoring index component to record a corresponding data packet monitoring index parameter when a data packet complying with the above specified data feature is received. In a specific implementation, the ACL rule may include a match item and an action, for example, the match item is a quintuple of a data packet, and the action is to record a data packet monitoring index parameter. For example, the ACL rule indicates to perform the following action when a data packet carrying the above-mentioned quintuple is received: updating the count of Counter corresponding to the quintuple, e.g. adding a set value, e.g., 1, to the original count.

Then the procedure shown in FIG. 2 is completed.

It can be seen from the procedure shown in FIG. 2 that in the present embodiment, data monitoring is no longer performed separately by Host CPU of the switch, but by cooperation of the Host CPU and the Switch chip on the switch (specifically, the CPU built in the Switch chip, referred to as ECPU), and data monitoring in a time unit of millisecond level or even below the millisecond level, such as microsecond level, is performed by the Switch chip (specifically, the CPU built in the Switch chip, referred to as ECPU), and the monitoring data is transmitted to the Host CPU to be forwarded by the Host CPU to the traffic analyzer for analysis, which achieves data monitoring at a millisecond level by the cooperation between the local Host CPU of the switch and the ECPU on the Switch chip. Further, the present embodiment achieves millisecond-level data monitoring through the cooperation of the local Host CPU of the switch and the ECPU on the Switch chip, thereby capturing the actual situation that AI data bursts timely in the AI training scenario of the intelligent computing center.

The port mode is described below by a specific embodiment:

### Embodiment 1:

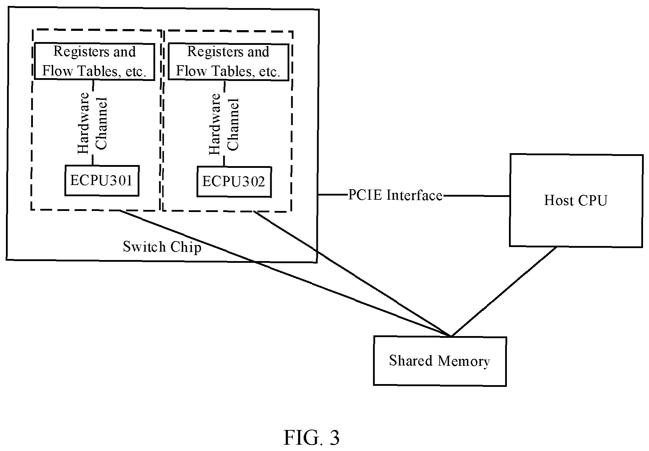

Referring to FIG. 3, FIG. 3 is a structural diagram showing internal networking of a switch according to an embodiment of the present application. In FIG. 3, the switch includes a Switch chip and a Host CPU. The Switch chip deploys two ECPUs, denoted ECPU301 and ECPU302, respectively. Where each ECPU manages a part of the ports of the switch. Each ECPU and the Host CPU communicates through a shared memory.

If the data monitoring mode of ECPU301 is the port mode. In order to ensure the monitoring performance, the Host CPU will configure one or more port monitoring index items on the above-mentioned shared memory. The ECPU301 reads from the shared memory the port monitoring index items such as port rates, occupancy of buffers configured for ports, the number of explicit congestion notification (ECN) marked packets, and the number of priority-based flow control (PFC) sending and receiving packets.

As an embodiment, the Host CPU further configures on the shared memory a monitoring period of the port monitoring index items, such as the first set period described above. The ECPU301 reads the first set period from the shared memory. Here, the first set period may be configured as a minimum value of 1 ms, or may be configured as a larger value, such as 2 ms, 5 ms, 10 ms, etc.

In the port mode, the ECPU301 reads, from registers (the registers respectively associated with each monitoring index item) corresponding to each managed port every first set period, real parameter values corresponding to each port monitoring index item in this first set period, such as the size of data transmitted by the port (used for calculating a port rate), occupancy of a buffer configured for the port, the number of explicit congestion notification (ECN) marked packets, and the number of priority-based flow control (PFC) sending and receiving packets. The real parameter values herein are collectively referred to as port monitoring index parameters.

ECPU301 reads the port monitoring index parameters during this period in the port mode and saves the port monitoring index parameters in a local memory. Limited by the memory storage space of ECPU301, for example, the local memory of ECPU301 can store the port monitoring index parameters obtained in 500 first set periods at most, and on this basis, the present embodiment sets the period for the ECPU301 to communicate with the Host CPU based on the limit of the memory storage space of the ECPU301. For example, the local memory of the ECPU301 can store acquired port monitoring index parameters in up to 500 first set periods, and then the period for the ECPU301 to communicate with the Host CPU can be 500 first set periods.

On this basis, when the current time is the time for the ECPU301 to communicate with the Host CPU (i.e., when it is time to communicate with the Host CPU), for example, exactly 500 first set periods, the ECPU301 transmits the port monitoring index parameters recorded in the local memory to the Host CPU and clears the local memory (equivalent to deleting the data packet monitoring index parameters that have been recorded in the local memory).

The Host CPU receives the port monitoring index parameters transmitted from the ECPU301, and transmits the acquired port monitoring index parameters to the traffic analyzer every periodic interval of communication between the Host CPU and the traffic analyzer. Here, the periodic interval is, for example, 5000 first set periods as described above, which is much larger than the first set period and is also larger than the time interval for the ECPU 301 to communicate with the Host CPU. For example, the Host CPU transmits the acquired port monitoring index parameters to the traffic analyzer every 5 seconds.

The traffic analyzer will graphically present the port monitoring index parameters, such as what is monitored for the designated ports or all ports within 1 ms, including the change of the port rates, the change of the number of ECN marked packets, the change of the sending and receiving frequency of PFC, and the change of the occupancy of buffers configured for ports. Thus, the high-precision monitoring based on the ports can be realized, and the real conditions of the network can be reflected in real time.

The processing of ECPU302 in the port mode is similar, which will not be described in detail herein.

Then the description of Embodiment 1 shown in FIG. 3 is completed.

The flow mode is described below by a specific embodiment:

### Embodiment 2:

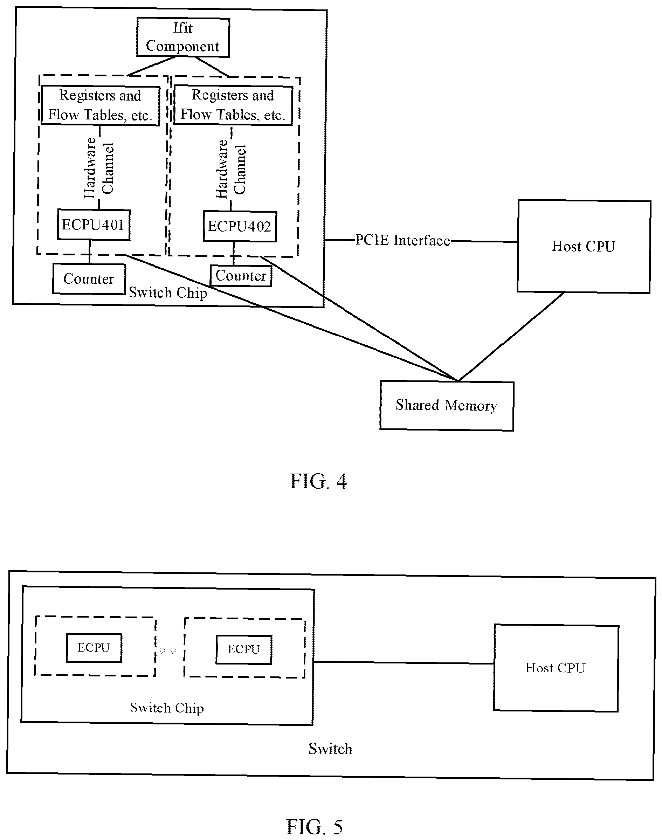

Referring to FIG. 4, FIG. 4 is a structural diagram showing internal networking of another switch according to an embodiment of the present application; In FIG. 4, the switch includes a Switch chip and a Host CPU. The Switch chip deploys two ECPUs, denoted ECPU501 and ECPU502, respectively. As shown in FIG. 4, the Switch chip may further include a data flow monitoring component. FIG. 4 illustrates the data flow monitoring component as an Ifit component. The following description takes the data flow monitoring component as the Ifit component as an example.

If the current requirement is a traffic burst with data-flow granularity to be monitored (millisecond-level granularity monitoring), the data feature of the data flow to be monitored can be specified in advance (simply denoted specified data feature). The data feature here includes, for example, a quintuple or other characteristic (such as a characteristic of a lossless packet, etc.).

As an embodiment, the present embodiment may configure the specified data feature for each data flow that needs to be monitored in the Ifit component.

In a specific implementation, the monitoring mode of the Ifit component is a high-precision monitoring mode (monitoring at a millisecond level can be realized), and in the high-precision monitoring mode, if the Ifit component monitors a data packet complying with the above-mentioned specified data feature, and if it is found that the ACL rule associated with the specified data feature does not exist locally, it is considered that the data packet received at this moment is the first data packet complying with the specified data feature, then a notification will be transmitted to the Host CPU.

Upon receiving the notification, the Host CPU assigns an ACL rule associated with the specified data feature. The ACL rule here binds one or more monitoring index components. The monitoring index components are used to record data packet monitoring index parameters based on the ACL rule. As an embodiment, the ACL rule herein may include a match item and an action item. The match item may be a quintuple of the first data packet. The action item may be that once the message matches the match item, a counter (counter) bound with the ACL rule is increased by a set value (i.e., the count of the counter is the above-mentioned data packet monitoring index parameter). The counter is a resource specifically allocated for the ACL rule. It should be noted that in the present embodiment, when it is applied to the AI training scenario of the intelligent computing center, there are generally not many data flows, and there are not many corresponding ACL rules, so as not to occupy too many resources.

In a flow mode, ECPU such as ECPU401 as shown in FIG. 4, scans each ACL rule-bound monitoring index component, such as counter, every second set period to read the data packet monitoring index parameters.

Still taking ECPU401 as an example, ECPU401 saves the read data packet monitoring index parameters in a local memory in the flow mode. Limited by the memory storage space of ECPU401, for example, the local memory of ECPU401 can store the data packet monitoring index parameters obtained in 500 second set periods at most, and on this basis, the present embodiment sets the period for the ECPU401 to communicate with the Host CPU based on the limit of the memory storage space of the ECPU401. For example, the local memory of the ECPU401 can store acquired data packet monitoring index parameters in up to 500 second set periods, and then the period for the ECPU401 to communicate with the Host CPU can be 500 second set periods.

On this basis, when the current time is the time for the ECPU401 to communicate with the Host CPU (i.e., when it is time to communicate with the Host CPU), for example, exactly 500 second set periods, the ECPU401 transmits the data packet monitoring index parameters recorded in the local memory to the Host CPU and clears the local memory (equivalent to deleting the data packet monitoring index parameters that have been recorded in the local memory).

The Host CPU receives the port monitoring index parameters transmitted from the ECPU401, and transmits the acquired port monitoring index parameters to the traffic analyzer every periodic interval of communication between the Host CPU and the traffic analyzer; Here, the periodic interval is, for example, 5000 first set periods as described above, which is much larger than the second set period and is also larger than the time interval for the ECPU401 to communicate with the Host CPU. For example, the Host CPU transmits the acquired data packet monitoring index parameters to the traffic analyzer every 5 seconds.

The traffic analyzer will graphically present the data packet monitoring index parameters, for example, the monitoring index parameters monitored for data packets of each data flow within 1 ms, to realize high-precision monitoring of the data flows and reflect the real condition of the network in real time.

The processing of ECPU402 in the flow mode is similar, which will not be described in detail herein.

Then the description of Embodiment 2 shown in FIG. 4 is completed.

The method provided by the embodiments of the present application is described above, and the apparatus provided by the embodiments of the present application is described below:
referring to FIG. 5, FIG. 5 is a structural diagram showing a switch according to an embodiment of the present application. The switch includes a Switch chip and a Host CPU deployed independently from the Switch chip; the Switch chip is deployed with at least one ECPU, and the ECPU is a built-in CPU on the Switch chip.

When the current data monitoring mode of any ECPU is the port mode, the ECPU obtains port monitoring index parameters associated with at least one port on a switch every first set period; when it is time to communicate with the Host CPU, the ECPU transmits the obtained port monitoring index parameters to the Host CPU to be forwarded by the Host CPU to a traffic analyzer to analyze data monitoring conditions; and
when the current data monitoring mode of any ECPU is a flow mode, the ECPU obtains data packet monitoring index parameters associated with data packets complying with a specified data feature every second set period; when it is time to communicate with the Host CPU, the ECPU transmits the obtained port monitoring index parameters to the Host CPU to be forwarded by the Host CPU to a traffic analyzer to analyze data monitoring conditions.

In some examples, the first set period and the second set period are the same or different; the first set period and the second set period are in time units of milliseconds, or in time units below milliseconds.

The obtaining, by any ECPU, port monitoring index parameters associated with at least one port on the switch every first set period further includes: recording the obtained port monitoring index parameters in a local memory of this ECPU; and
the transmitting the obtained port monitoring index parameters to the Host CPU further includes deleting the port monitoring index parameters that have been recorded in the local memory.

The obtaining the data packet monitoring index parameters associated with data packets complying with a specified data feature every second set period further includes: recording the obtained data packet monitoring index parameters in the local memory of this ECPU;
the transmitting the obtained data packet monitoring index parameters to the Host CPU further includes deleting the data packet monitoring index parameters that have been recorded in the local memory.

The port monitoring index parameter obtained in any period includes real parameter values corresponding to at least one port monitoring index item in this period; here, the port monitoring index items are issued from the Host CPU to the ECPU.

The port monitoring index parameters obtained in any period is used to reflect the real condition of the network in this period;
the port monitoring index parameters includes at least one of:
port rates, occupancy of buffers configured for ports, the number of explicit congestion notification (ECN) marked packets, and the number of priority-based flow control (PFC) sending and receiving packets; where the number of ECN marked packets refers to the number of data packets carrying an ECN flag transmitted in this period, or the number of data packets carrying an ECN flag transmitted via the at least one port in this period, and the at least one port refers to one or more ports managed by this ECPU; and the number of PFC sending and receiving packets refers to the number of PFC packets transmitted in this period and a number of PFC packets received in this period.

The Switch chip further includes a data flow monitoring component; the data flow monitoring component notifies the Host CPU when monitoring a first data packet complying with a specified data feature, so that the Host CPU allocates an ACL rule associated with the specified data feature; the ACL rule binds to one or more monitoring index components, and the bound monitoring index components are used for recording data packet monitoring index parameters based on the ACL rule;
the obtaining data packet monitoring index parameter associated with a data packet complying with a specified data feature every second set period includes: reading the data packet monitoring index parameters from the monitoring index components bound with the ACL rule associated with the specified data feature every second set period.

The monitoring index component is a counter; and the data packet monitoring index parameter refers to the number of data packets complying with the specified data feature.

The time for any ECPU to communicate with the Host CPU is set based on a space size of the local memory of the ECPU; and the time interval at which any ECPU communicates with the Host CPU is greater than the first set period and greater than the second set period.

The ECPU and the Host CPU communicate via a shared memory;
the transmitting the obtained port monitoring index parameters to the Host CPU includes: transmitting the obtained port monitoring index parameters to the shared memory, so that the Host CPU obtains the port monitoring index parameters from the shared memory; and
the transmitting the obtained data packet monitoring index parameters to the Host CPU includes: transmitting the obtained data packet monitoring index parameters to the shared memory, so that the Host CPU obtains the data packet monitoring index parameters from the shared memory.

At this point, a description of the structural of switch shown in FIG. 5 has been completed.

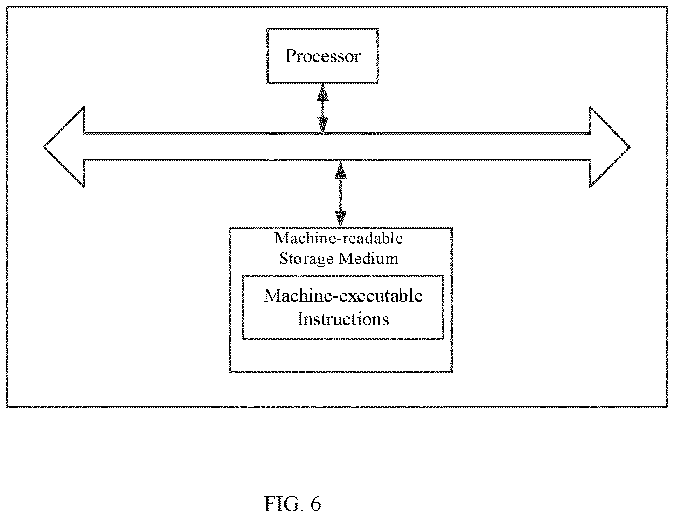

The embodiment of the present application also provides a hardware structure of the above-mentioned apparatus, and FIG. 6 is a structural diagram showing an electronic device according to an embodiment of the present application. As shown in FIG. 6, the hardware structure may include: a processor and a machine-readable storage medium storing machine-executable instructions capable of being executed by the processor; the processor is configured to execute the machine-executable instructions to perform the methods disclosed in the above examples of the present application.

Based on the same application concept as the above-mentioned method, an embodiment of the present application also provides a machine-readable storage medium having stored thereon machine-executable instructions capable of being executed by a processor; these machine-executable instructions are executed by a processor to perform the processes of the above-mentioned embodiments of the present application.

Illustratively, the machine-readable storage medium can be any electronic, magnetic, optical, or other physical storage apparatuses that can contain or store information, such as executable instructions, data, and the like. For example, the machine-readable storage medium may be: a Radom Access Memory (RAM), a volatile memory, a non-volatile memory, a flash memory, a storage drive (such as a hard disk drive), a solid-state hard disk, or a similar storage medium, or a combination thereof.

For convenience of description, the above apparatus is described with functions divided into various units, respectively. Of course, the functionality of the various units may be implemented in the same or multiple pieces of software and/or hardware in practicing the present application.

A person skilled in the art will appreciate that embodiments of the present application may take the form of an entirely hardware embodiment, an entirely software embodiment or an embodiment combining software and hardware aspects.

The foregoing is by way of example only and is not intended as limiting. Various modifications and alterations to this application will become apparent to a person skilled in the art. Any alterations, permutations, and improvements made within the spirit and the principles of the present application shall fall within the scope of the appended claims of the present application.

## Claims

1. A data monitoring method, applied to a switch; the switch comprises a Switch chip and a Host CPU deployed independently from the Switch chip; the Switch chip is deployed with at least one ECPU, and the ECPU is a built-in CPU on the Switch chip; the data monitoring method comprising:
for any one of the at least one ECPU,
in response to a current data monitoring mode of the ECPU being a port mode, the ECPU obtains port monitoring index parameters associated with at least one port on the switch every first set period; under a condition that it is time to communicate with the Host CPU, the ECPU transmits the obtained port monitoring index parameters to the Host CPU to be forwarded by the Host CPU to a traffic analyzer to analyze data monitoring conditions; and
in response to the current data monitoring mode of the ECPU being a flow mode, the ECPU obtains data packet monitoring index parameters associated with data packets complying with a specified data feature every second set period; under a condition that it is time to communicate with the Host CPU, the ECPU transmits the obtained data packet monitoring index parameters to the Host CPU to be forwarded by the Host CPU to a traffic analyzer to analyze data monitoring conditions.

2. The data monitoring method according to claim 1, wherein the first set period and the second set period are the same or different; and
the first set period and the second set period are in time units of milliseconds, or in time units below milliseconds.

3. The data monitoring method according to claim 1, wherein the ECPU obtaining port monitoring index parameters associated with at least one port on the switch every first set period further comprises:
recording the obtained port monitoring index parameters in a local memory of this ECPU; and
the transmitting the obtained port monitoring index parameters to the Host CPU further comprises:
deleting the port monitoring index parameters that have been recorded in the local memory.

4. The data monitoring method according to claim 1, wherein the obtaining data packet monitoring index parameters associated with data packets complying with a specified data feature every second set period further comprises:
recording the obtained data packet monitoring index parameters in a local memory of this ECPU; and
the transmitting the obtained data packet monitoring index parameters to the Host CPU further comprises:
deleting the data packet monitoring index parameters that have been recorded in the local memory.

5. The data monitoring method according to claim 1, wherein the port monitoring index parameters obtained in any period comprise real parameter values corresponding to at least one port monitoring index item in this period; and
the port monitoring index items are issued from the Host CPU to the ECPU.

6. The data monitoring method according to claim 1, wherein the port monitoring index parameters obtained in any period are used to reflect real conditions of a network in this period;
the port monitoring index parameters comprise at least one of:
port rates, occupancy of buffers configured for ports, a number of explicit congestion notification, ECN, marked packets, and a number of priority-based flow control, PFC, sending and receiving packets; wherein the number of ECN marked packets refers to a number of data packets carrying an ECN flag transmitted in this period, or a number of data packets carrying an ECN flag transmitted via the at least one port in this period, and the at least one port refer to one or more ports managed by this ECPU; and the number of PFC sending and receiving packets refers to a number of PFC packets transmitted in this period and a number of PFC packets received in this period.

7. The data monitoring method according to claim 1, wherein the Switch chip further comprises a data flow monitoring component;
the data flow monitoring component notifies the Host CPU in response to monitoring a first data packet complying with the specified data feature, so that the Host CPU allocates an ACL rule associated with the specified data feature; the ACL rule binds to one or more monitoring index components, and the bound monitoring index components are configured for recording the data packet monitoring index parameters based on the ACL rule; and
the obtaining data packet monitoring index parameters associated with data packets complying with a specified data feature every second set period comprises:
reading the data packet monitoring index parameters from the monitoring index components bound with the ACL rule associated with the specified data feature every second set period.

8. The data monitoring method according to claim 7, wherein the monitoring index component is a counter; and
the data packet monitoring index parameter refers to a number of data packets complying with the specified data feature.

9. The data monitoring method according to claim 3 or 4, wherein a time for any ECPU to communicate with the Host CPU is set based on a space size of the local memory of the ECPU; and
a time interval at which any ECPU communicates with the Host CPU is greater than the first set period and greater than the second set period.

10. The data monitoring method according to any one of claims 1 to 8, wherein the ECPU and the Host CPU communicate via a shared memory;
the transmitting the obtained port monitoring index parameters to the Host CPU comprises:
transmitting the obtained port monitoring index parameters to the shared memory, so that the Host CPU obtains the port monitoring index parameters from the shared memory; and
the transmitting the obtained data packet monitoring index parameters to the Host CPU comprises:
transmitting the obtained data packet monitoring index parameters to the shared memory, so that the Host CPU obtains the data packet monitoring index parameters from the shared memory.

11. A switch, wherein the switch comprises a Switch chip and a Host CPU deployed independently from the Switch chip; the Switch chip is deployed with at least one ECPU, and the ECPU is a built-in CPU on the Switch chip;
for any one of the at least one ECPU,
in response to a current data monitoring mode of the ECPU being a port mode, the ECPU obtains port monitoring index parameters associated with at least one port on the switch every first set period; under a condition that it is time to communicate with the Host CPU, the ECPU transmits the obtained port monitoring index parameters to the Host CPU to be forwarded by the Host CPU to a traffic analyzer to analyze data monitoring conditions; and
in response to the current data monitoring mode of the ECPU being a flow mode, the ECPU obtains data packet monitoring index parameters associated with data packets complying with a specified data feature every second set period; under a condition that it is time to communicate with the Host CPU, the ECPU transmits the obtained data packet monitoring index parameters to the Host CPU to be forwarded by the Host CPU to a traffic analyzer to analyze data monitoring conditions.

12. The switch according to claim 11, wherein the first set period and the second set period are the same or different; and the first set period and the second set period are in time units of milliseconds, or in time units below milliseconds; and/or,
the obtaining port monitoring index parameters associated with at least one port on the switch every first set period further comprises: recording the obtained port monitoring index parameters in a local memory of this ECPU; and
the transmitting the obtained port monitoring index parameters to the Host CPU further comprises deleting the port monitoring index parameters that have been recorded in the local memory; and/or,
the obtaining the data packet monitoring index parameters associated with data packets complying with a specified data feature every second set period further comprises: recording the obtained data packet monitoring index parameters in the local memory of this ECPU;
the transmitting the obtained data packet monitoring index parameters to the Host CPU further comprises deleting the data packet monitoring index parameters that have been recorded in the local memory; and/or,
the port monitoring index parameters obtained in any period comprise real parameter values corresponding to at least one port monitoring index item in this period; the port monitoring index items are issued from the Host CPU to the ECPU; and/or,
the port monitoring index parameters obtained in any period are used to reflect real conditions of a network in this period;
the port monitoring index parameters comprise at least one of:
port rates, occupancy of buffers configured for ports, a number of explicit congestion notification, ECN, marked packets, and a number of priority-based flow control, PFC, sending and receiving packets; wherein the number of ECN marked packets refers to a number of data packets carrying an ECN flag transmitted in this period, or the number of data packets carrying an ECN flag transmitted via at least one port in this period, and the at least one port refers to one or more ports managed by this ECPU; and the number of PFC sending and receiving packets refers to the number of PFC packets transmitted in this period and a number of PFC packets received in this period; and/or,
the Switch chip further comprises a data flow monitoring component; the data flow monitoring component notifies the Host CPU in response to monitoring a first data packet complying with the specified data feature, so that the Host CPU allocates an ACL rule associated with the specified data feature; and the ACL rule binds to one or more monitoring index components, and the bound monitoring index components are configured for recording the data packet monitoring index parameters based on the ACL rule;
the obtaining data packet monitoring index parameters associated with data packets complying with a specified data feature every second set period comprises: reading the data packet monitoring index parameters from the monitoring index components bound with the ACL rule associated with the specified data feature every second set period; and/or,
the monitoring index component is a counter; and the data packet monitoring index parameter refers to a number of data packets complying with the specified data feature; and/or,
a time for any ECPU to communicate with the Host CPU is set based on a space size of the local memory of the ECPU; and a time interval at which any ECPU communicates with the Host CPU is greater than the first set period and greater than the second set period; and/or,
the ECPU and the Host CPU communicate via a shared memory;
the transmitting the obtained port monitoring index parameters to the Host CPU comprises: transmitting the obtained port monitoring index parameters to the shared memory, so that the Host CPU obtains the port monitoring index parameters from the shared memory; and
the transmitting the obtained data packet monitoring index parameters to the Host CPU comprises: transmitting the obtained data packet monitoring index parameters to the shared memory, so that the Host CPU obtains the data packet monitoring index parameters from the shared memory.

13. An electronic device, wherein the electronic device comprises: a processor and a machine-readable storage medium;
the machine-readable storage medium stores machine-executable instructions capable of being executed by the processor; and
the processor is configured to execute the machine-executable instructions to perform the data monitoring method according to any one of claims 1 to 10.

14. A machine-readable storage medium, wherein the machine-readable storage medium stores machine-executable instructions capable of being executed by a processor; and
the machine-executable instructions are executed by the processor to perform the data monitoring method according to any one of claims 1 to 10.
